# EUROPEAN PATENT APPLICATION

(11) **EP 4 566 485 A1**
(43) Date of publication of application: **11.06.2025**
(21) Application number: 23895925.8
(22) Date of filing: 14.06.2023
(51) Int. Cl.: A47C 7/38

(54) **SEAT HEADREST ADJUSTED IN FOUR DIRECTIONS, AND ASSEMBLY METHOD**

(30) Priority: 30.11.2022 CN 202211524856
(71) Applicant: Yanfeng International Automotive Technology Co., Ltd., Shanghai 201306 (CN)
(72) Inventor: WU, Feifei, Shanghai 201306 (CN); SUN, Yue, Shanghai 201306 (CN); MA, Xiaoliang, Shanghai 201306 (CN); SHEN, Yineng, Shanghai 201306 (CN); WANG, Feng, Shanghai 201306 (CN)
(74) Representative: Colombo, Stefano Paolo
(86) International application number: PCT/CN2023/100088
(87) International publication number: WO 2024/113760

(57) **Abstract**

A four-direction adjustable seat headrest and an assembly method, comprising a headrest rod (100) and a headrest body, wherein the headrest rod (100) is provided with a pair of headrest supporting rods (110a, 110b) for supporting the headrest body; and locking slots (111a, 111b) for locking the headrest body are provided at intervals in each of the headrest supporting rods (110a, 110b); further comprising first and second locking and unlocking components (500a, 500b), which are configured to lock the headrest body to the pair of headrest supporting rods (110a, 110b) and can adjust the headrest body on the pair of headrest supporting rods (110a, 110b), wherein the first and second locking and unlocking components (500a, 500b) are mounted on the pair of headrest supporting rods (110a, 110b), and the first and second locking and unlocking components (500a, 500b) are locked to or unlocked from the pair of supporting rods (110a, 110b) by means of locking and unlocking steel wires (510a, 510b) mounted therein, wherein when locking, the locking and unlocking steel wires (510a, 510b) are embedded into the locking slots (111a, 111b) in the pair of headrest supporting rods (110a, 110b), when unlocking, the locking and unlocking steel wires (510a, 510b) exit from the locking slots (111a, 111b) in the pair of headrest supporting rods (110a, 110b), the locking and unlocking steel wires (510a, 510b) in the first and second locking and unlocking components (500a, 500b) are unlocked, as driven by an unlocking means (600) mounted on the first and second locking and unlocking components (500a, 500b).

## Description

### TECHNICAL FIELD

The invention relates to the technical field of seats, in particular to a four-direction adjustable seat headrest, and an assembly method.

### BACKGROUND

Nowadays, unlocking methods of headrest in the market are complicated and have applied for patents. For example, Chinese utility model patent CN210478471U discloses a new type of Z-direction adjustment mechanism for an automobile sleeping headrest, in which a button is in snap-fitting connection to a headrest housing, a torsion push rod is in clearance fit with upper and lower end sliders, and is slidable leftward and rightward thereon, the upper and lower end sliders and a slider and the headrest rod are in snap-fitting connection, a spring is coaxially matched with the torsion push rod, and has another end abutted against the upper and lower end sliders, the slider is connected with the upper and lower sliders by bolts, and the spring I is coaxially matched with the slider, the another end of the spring I abuts against the upper and lower end sliders. The utility model has the advantages of reasonable design, simple headrest mechanism and convenient operation, allows continuous adjustment of Z-direction and X-direction travel at the same time, and can meet different needs of most users. The adjustment mechanism is controlled by the button to realize the one-time continuous adjustment function of the headrest in Z direction and X direction, so that it can be adjusted to a suitable and comfortable use position, which overcomes the disadvantages of sectional adjustment, simplifies the operation steps and saves the operator's physical strength and time. However, the locking block of this patent is in a U-shaped structure, and the locking piece is plastic-coated, so that the cost is high, and the whole locking mechanism is complicated and has a high cost.

Chinese invention patent CN107264358B discloses an integral single-frame bidirectional headrest with a U-shaped single support rod, which comprises a U-shaped support rod, an integral frame and a face cover, wherein an exterior of the integral frame is covered with the face cover, the integral frame comprises an integral component having a lower side and an interior in a hollow structure, the interior of the integral frame is provided with a U-shaped support rod capable of moving up and down, and both ends of the U-shaped support rod face downward and pass through the lower side of the integral frame. Both ends of the U-shaped support rod are provided with a first guide sleeve which is buckled with an inner wall of a lower portion of the integral frame; a second guide sleeve which is fitted around the U-shaped support rod is mounted above the first guide sleeve; an unlocking steel wire with an upper end bent towards the U-shaped support rod is mounted on the first guide sleeve; a row of unlocking grooves matched with the unlocking steel wire are arranged on one side of each of two vertical portions of the U-shaped support rod; and an unlocking rod connected with the unlocking steel wire is horizontally moveably mounted above the second guide sleeve.

A longitudinally displaceable headrest disclosed in Chinese patent CN102442233B comprises a carrier element having an upper base and a connecting device for fixing to a backrest of a motor vehicle seat, and a pad portion having a supporting member and displaceable in a displacement direction relative to the carrier element, wherein for this purpose, the carrier element is characterized by a locking band having a plurality of locking elements, and, the support member has a locking device which engages with one of the locking elements in a locking position and disengages from the locking element in a releasing position, and the support member further forms at least one oval hole around the upper base. The support member has a spring-loaded band extending along a lower edge of the oval hole, abutting the upper base and urging the upper base into contact with an upper edge of the oval hole. The locking block hole of the locking plug rod in this patent is U-shaped.

The above patents cannot effectively solve the problem of X-direction unlocking mode.

### SUMMARY

A first of the technical problems to be solved by the invention is to provide a four-direction adjustable seat headrest with simple structure, stable locking and unlocking, convenient assembly, compact structure and low cost, which can effectively solve the problem of X-direction unlocking mode.

A second of the technical problems to be solved by the present invention is to provide an assembly method of the four-direction adjustable seat headrest.

In order to achieve the above objectives of the present invention, a four-direction adjustable seat headrest of the present invention comprises a headrest rod and a headrest body, the headrest rod comprising a pair of headrest supporting rods for supporting the headrest body; and locking slots for locking the headrest body being formed in each of the headrest supporting rods in a spaced manner, characterized in that the seat headrest further comprises first and second locking and unlocking components configured to lock the headrest body to the pair of headrest supporting rods and capable for adjusting the headrest body on the pair of headrest supporting rods, the first and second locking and unlocking components are mounted on the pair of headrest supporting rods, and locked to or unlocked from the pair of supporting rods respectively by means of locking and unlocking steel wires mounted therein, wherein, when locking, the locking and unlocking steel wires are embedded into the locking slots in the pair of headrest supporting rods, and when unlocking, the locking and unlocking steel wires exit from the locking slots in the pair of headrest supporting rods; the locking and unlocking steel wires in the first and second locking and unlocking components are unlocked, as driven by an unlocking means mounted on the first and second locking and unlocking components.

In a preferred embodiment of the present invention, the locking slots on the pair of headrest support rods have the same orientation.

In a preferred embodiment of the present invention, the unlocking means is moveable in a Y direction.

In a preferred embodiment of the present invention, the locking and unlocking steel wires each comprise a U-shaped structure embracing the headrest support rod and having a locking and unlocking portion, the locking and unlocking portion is embedded into the locking slot of the pair of support rods when locking and exits from the locking slot of the pair of headrest support rods when unlocking; and the locking and unlocking portions extend out of the first and second locking and unlocking components and are connected with the unlocking means, such that the unlocking means urges the locking and unlocking portions into a movement to realize locking and unlocking.

In a preferred embodiment of the present invention, the unlocking means comprises an unlocking lever and an unlocking spring, wherein the unlocking lever is movably mounted on each of the first and second locking and unlocking components and is connected with the locking and unlocking portion of the locking and unlocking steel wire in each of the first and second locking and unlocking components; and the unlocking spring is mounted on the first and/or second locking and unlocking components and acts between the first and/or second locking and unlocking components and the unlocking levers.

In a preferred embodiment of the present invention, each of the first and second locking and unlocking components is provided with an unlocking lever guide groove, and two ends of the unlocking lever are slidably arranged in the unlocking lever guide grooves of the first and second locking and unlocking components respectively.

In a preferred embodiment of the present invention, an unlocking button is arranged at one end of the unlocking lever, and the unlocking button is floatingly arranged on the headrest body.

In a preferred embodiment of the present invention, the first and second locking and unlocking components fully wrap the headrest support rods.

In a preferred embodiment of the present invention, each of the first and second locking and unlocking components is provided with a wrapping hole in a closed form, and the headrest support rod passes through the wrapping hole.

In a preferred embodiment of the present invention, a plurality of ribs are circumferentially arranged at intervals on a wall of each wrapping hole, and the ribs are in contact with the headrest support rod.

In a preferred embodiment of the present invention, both the first and second locking and unlocking components are mounted on the headrest support rods by means of Ω rings clamped on the headrest support rods.

In a preferred embodiment of the present invention, Ω ring slots are arranged in the first and second locking and unlocking components, and the Ω rings are inserted into the Ω ring slots.

In a preferred embodiment of the present invention, locking and unlocking steel wire slots are arranged in both the first and second locking and unlocking components, and the locking and unlocking steel wires are inserted into the locking and unlocking steel wire slots.

In a preferred embodiment of the present invention, the locking and unlocking steel wire slot has a bottom that is open, and the locking and unlocking steel wire is inserted into the locking and unlocking steel wire slot through the open in the bottom.

In a preferred embodiment of the present invention, locking and unlocking steel wire perforations are arranged in the first and second locking and unlocking components, which are in communication with the locking and unlocking steel wire slots, and the unlocking portions of the locking and unlocking steel wires penetrate through the first and second locking and unlocking components via the locking and unlocking steel wire perforations.

In a preferred embodiment of the present invention, the locking and unlocking steel wire slots vertically intersect with the wrapping holes.

In a preferred embodiment of the present invention, each of the first and second locking and unlocking components is provided with a headrest body mounting portion, and the headrest body is fixed to the headrest body mounting portion through fasteners.

In a preferred embodiment of the present invention, the headrest body comprises a front cover, a middle cover and a rear cover, wherein the middle cover and the front cover wrap the first and second locking and unlocking components and the headrest rod, wherein the front cover is fixed to the headrest body mounting portion through fasteners, the middle cover is buckled on the front cover, and the rear cover is mounted on the middle cover.

In a preferred embodiment of the present invention, at least one groove is arranged on each of the first and second locking and unlocking components, and at least two ribs are arranged on the front cover, and the ribs are inserted into the corresponding grooves.

In a preferred embodiment of the present invention, at least one locking block stopping potion is arranged on each of the first and second locking and unlocking components, and at least two barbs are arranged on the front cover, and the barbs are hooked on the corresponding locking block stopping portion.

In a preferred embodiment of the present invention, upper ends of the pair of headrest support rods are connected through a headrest support crossbar, the front cover is mounted on the headrest support crossbar through a floater, and the floater is floatingly supported on the front cover through a floating spring.

In a preferred embodiment of the present invention, a first floating rib is arranged on the middle cover, a second floating rib is arranged on the floater, and the first floating rib and the second floating rib are in contact with the headrest support crossbar.

In a preferred embodiment of the present invention, lower ends of the pair of headrest support rods are respectively connected with a headrest support straight bar through a bent portion, and a chord length of the bent portion is greater than a length of wrapping holes in the first and second locking and unlocking components.

An assembly method of the four-direction adjustable seat headrest of the present invention comprises steps of the following:
Step 1: inserting the pair of locking and unlocking steel wires into the first and second locking and unlocking components respectively;
Step 2: passing the headrest support straight bars through the wrapping holes in the first and second locking and unlocking components, so that the first and second locking and unlocking components are fitted around the headrest support straight bars, then moving the first and second locking and unlocking components upward along the headrest support straight bars to positions close to the bent portions, and then while rotating the first and second locking and unlocking components inward by 90°, moving the same over the bent portions, after the first and second locking and unlocking components are moved to the positions of the headrest support rods, rotating them outward by 90°, so that the unlocking portions in the locking and unlocking steel wires correspond to the locking slots on the pair of headrest support rods in terms of positions and are embedded into the locking slots on the pair of headrest support rods, and at the same time, the headrest body mounting portions of the first and second locking and unlocking components are opposite and located on inner sides of the pair of headrest support rods;
Step 3: inserting the pair of Ω rings into the first and second locking and unlocking components respectively and clamping them on the headrest support rods;
Step 4: mounting the unlocking means to the first and second locking and unlocking components;
Step 5: mounting the headrest body to the first and second locking and unlocking components and the headrest rod.

Due to adoption of the technical solutions above, the present invention has the advantages of simple structure, stable locking and unlocking, convenient assembly, compact structure, low cost, being economically practical, and can effectively solve the problem of X-direction unlocking mode.

### BRIEF DESCRIPTION OF THE DRAWINGS

Fig. 1 is an exploded schematic view of a four-direction adjustable seat headrest of the present invention.
Fig. 2 is an exploded schematic view of the four-direction adjustable seat headrest of the present invention (with the headrest body removed).
Fig. 3 is a schematic view (with the unlocking means removed) showing that the first and second locking and unlocking components in the four-direction adjustable seat headrest of the present invention are mounted on a pair of headrest support rods.
Fig. 4 is a schematic view (including the unlocking means) showing that first and second locking and unlocking components and the unlocking means in the four-direction adjustable seat headrest of the present invention are mounted on a pair of headrest support rods.
Fig. 5 is an enlarged schematic view at I in Fig. 3.
Fig. 6 is an enlarged sectional view at I in Fig. 3.
Fig. 7 is an enlarged top view at I in Fig. 3.
Fig. 8 is a cross-sectional view taken along line a-a of Fig. 7.
Fig. 9 is a schematic structural view of the left locking and unlocking component of the present invention.
Fig. 10 is a bottom view of Fig. 9.
Fig. 11 is a top view of Fig. 9.
Fig. 12 is a right side view of Fig. 9.
Fig. 13 is a left view of Fig. 9.
Fig. 14 is a schematic perspective view of the left locking and unlocking component of the present invention viewed from one direction.
Fig. 15 is a perspective view of the left locking and unlocking component of the present invention viewed from another direction.
Fig. 16 is a perspective view of the left locking and unlocking component of the present invention from a further direction.
Fig. 17 is a perspective view of the right locking and unlocking component of the present invention, viewed from one direction.
Fig. 18 is an enlarged schematic view of the left locking and unlocking component of the present invention.
Fig. 19 is a cross-sectional view taken along line A-A of Fig. 18.
Fig. 20 is a cross-sectional view taken along line B-B of Fig. 18.
Figs. 21a to 21d are schematic diagrams showing the process of inserting the left locking and unlocking steel wire into the left locking and unlocking component.
Fig. 22 is a perspective view of the right locking and unlocking component of the present invention, viewed from one direction.
Fig. 23 is a perspective view of the right locking and unlocking component of the present invention, viewed from a further direction.
Fig. 24 is a schematic diagram of the mounting of the front cover to the left locking and unlocking component, the right locking and unlocking component and the headrest rod of the present invention.
Fig. 25 is a cross-sectional view taken along line a-a of Fig. 24.
Fig. 26 is a cross-sectional view taken along line b-b of Fig. 24.
Fig. 27 is an assembly diagram between the front cover and the left locking and unlocking component.
Figs. 28a to 28d are schematic views of the process of assembling the left locking and unlocking component to the headrest rod.
Fig. 29 is a schematic diagram of the structure of the headrest rod.
Fig. 30 is an enlarged schematic view at I in Fig. 29.
Fig. 31 is an enlarged schematic view at II in Fig. 29.
Fig. 32 is an enlarged perspective view of the left locking and unlocking component.
Fig. 33 is an enlarged perspective view of the right locking and unlocking component.
Fig. 34 is an assembly perspective view of the left locking and unlocking component assembled to the bent portion of the headrest rod.
Fig. 35 is an assembly schematic diagram of the left locking and unlocking component assembled to the bent portion of the headrest rod.
Fig. 36 is a cross-sectional view taken along line A-A of Fig. 35.
Fig. 37 is an assembly perspective view of the left locking and unlocking component assembled to the headrest support rod.
Fig. 38 is an assembly schematic diagram of the left locking and unlocking component assembled to the headrest support rod.
Fig. 39 is a cross-sectional view taken along line A-A of Fig. 38.
Fig. 40 is a schematic diagram of unlocking and locking according to the present invention.
Fig. 41 is a perspective view of the unlocking lever from one direction.
Fig. 42 is a top view of the unlocking lever.
Fig. 43 is a perspective view of the unlocking lever from another direction.
Fig. 44 is a perspective view of the unlocking lever from a further direction.
Fig. 45 is an assembly diagram between the unlocking means and the locking and unlocking steel wire.
Fig. 46 is an assembly diagram between the unlocking means and the left and right locking and unlocking components.
Fig. 47 is an assembly schematic diagram of the unlocking means, the left and right locking and unlocking components, and the headrest rod.
Fig. 48 is a schematic diagram of the unlocking means, the left and right locking and unlocking components in the locked state.
Fig. 49 is a schematic diagram of the unlocking means, the left and right locking and unlocking components in the unlocked state.
Fig. 50 is a schematic diagram of the unlocking means, the left and right locking and unlocking components and the headrest rod in the locked state.
Fig. 51 is a plan view of the unlocking means, the left and right locking and unlocking components and the headrest rod in the locked state.
Fig. 52 is a cross-sectional view taken along line a-a of Fig. 51.
Fig. 53 is a schematic diagram of the headrest rod and the locking and unlocking steel wire in the locked state.
Fig. 54 is a schematic diagram of the unlocking means, the left and right locking and unlocking components and the headrest rod in the unlocked state.
Fig. 55 is a cross-sectional view taken along line a-a of Fig. 54.
Fig. 56 is a schematic diagram of the headrest rod and the locking and unlocking steel wire in the unlocked state.
Fig. 57 is an assembly schematic diagram of the headrest rod, the unlocking means, the left and right locking and unlocking components, the front cover and the middle cover.
Fig. 58 is an exploded view of the headrest rod, unlocking component, left and right locking and unlocking components, front cover and middle cover.
Fig. 59 is a structural schematic diagram of a floater.
Fig. 60 is an assembly diagram between the floater and the floater spring.
Fig. 61 is a partial structural diagram of the front cover.
Fig. 62 is an assembly diagram of the floater, the floater spring and the front cover.
Fig. 63 is a cross-sectional view taken along line a-a of Fig. 62.
Fig. 64 is a schematic diagram of the floater in the uppermost position.
Fig. 65 is a schematic diagram of the floater in the lowermost position.
Fig. 66 is a schematic diagram of the assembly of the headrest rod, the floater and the middle cover.
Fig. 67 is a schematic diagram of the middle cover structure.
Fig. 68 is a perspective view of the floater.
Fig. 69 is a front view of the floater.
Fig. 70 is a cross-sectional view taken along line M-M of Fig. 69.

### DETAILED DESCRIPTION

The present invention will be further described with reference to the attached drawings and specific embodiments.

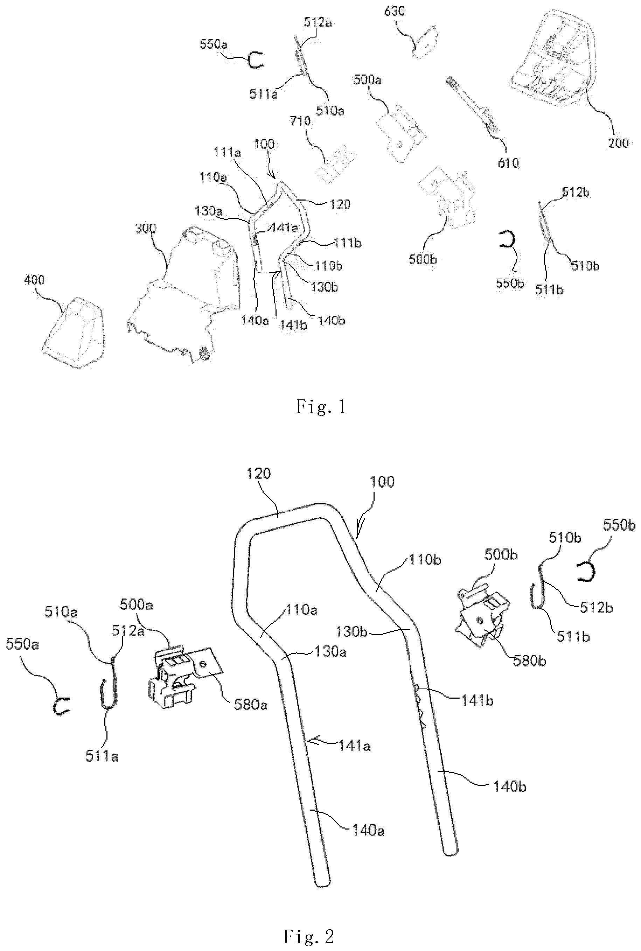

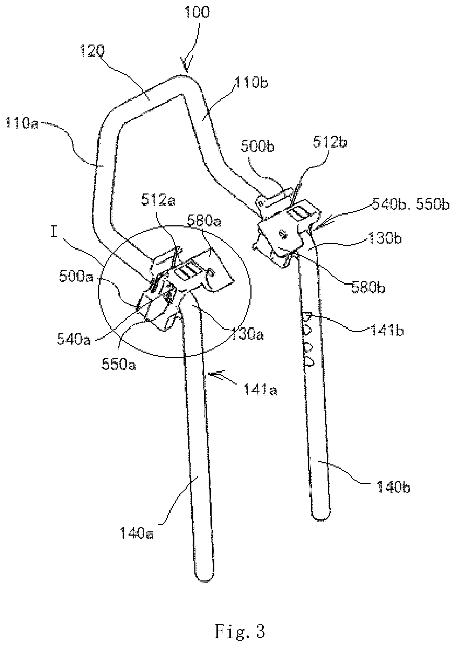

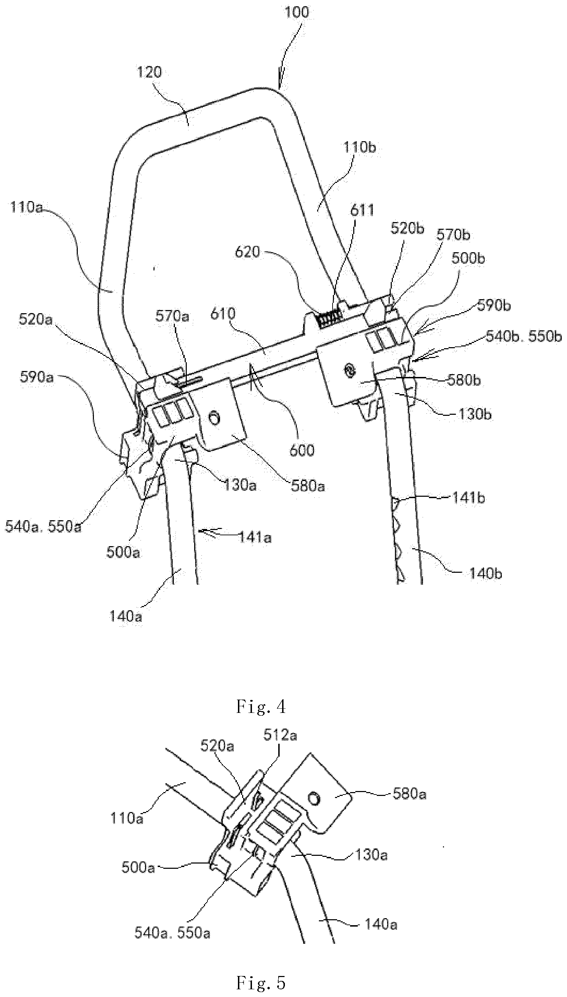

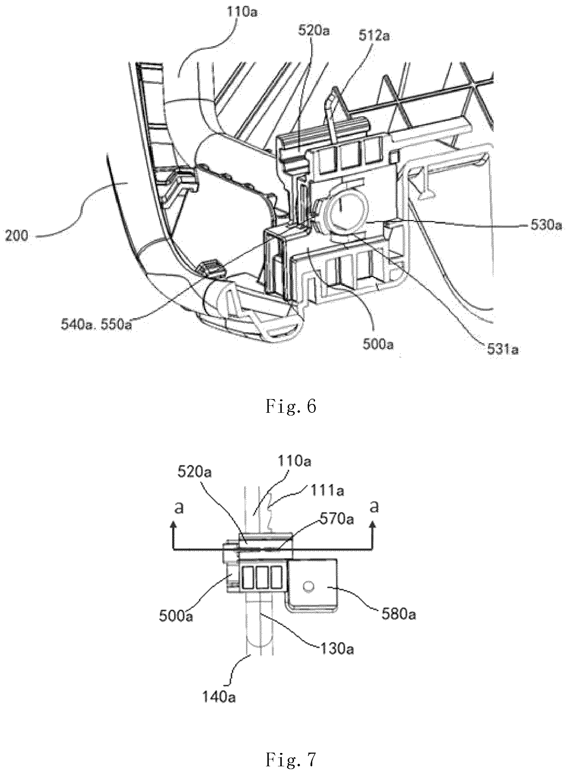

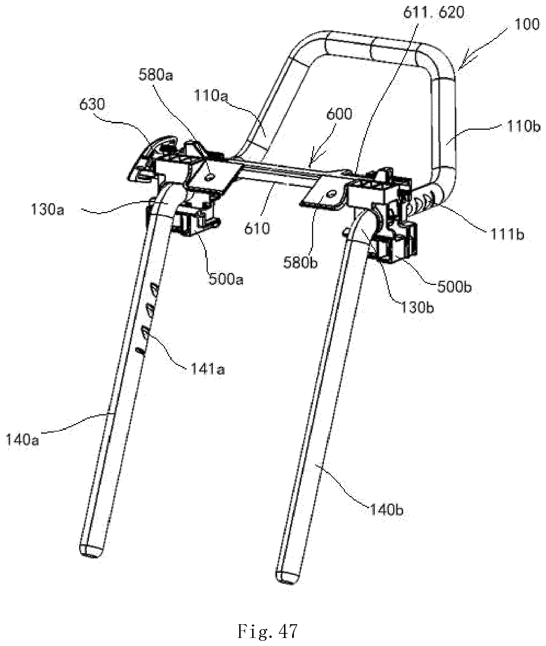

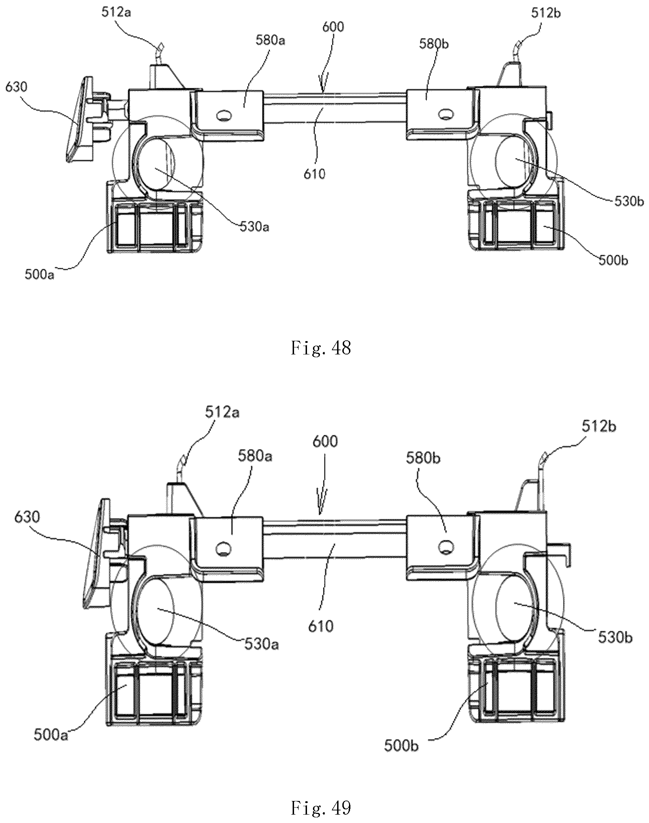

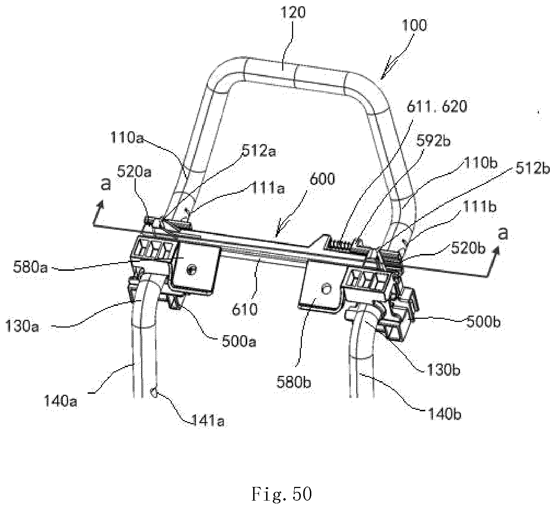

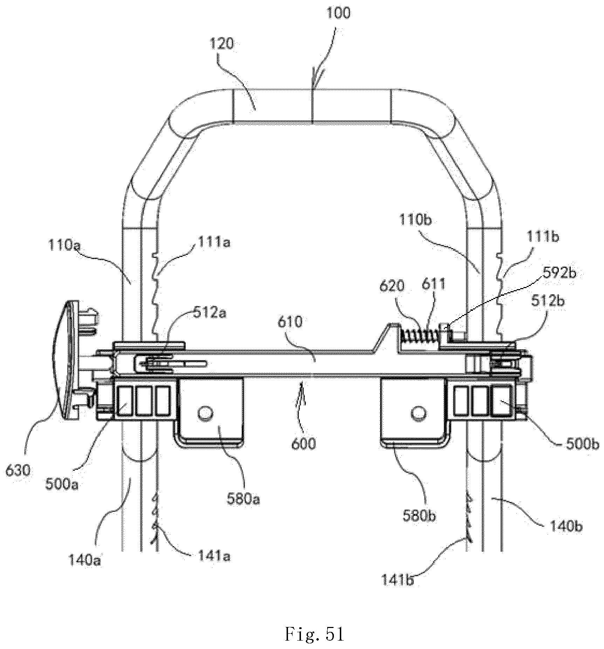

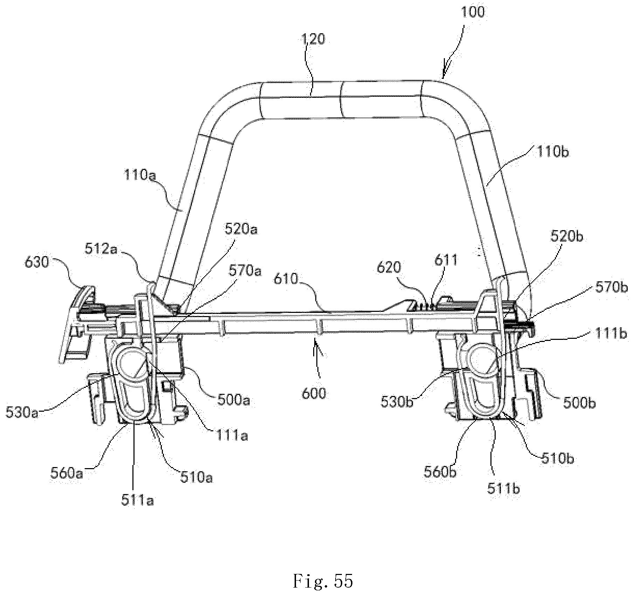

Referring to Figs. 1 to 8 and 47 to 56, the four-direction adjustable seat headrest shown in the figures comprises a headrest rod 100 and a headrest body. The headrest body comprises a front cover 200, a middle cover 300 and a rear cover 400.

The headrest rod 100 comprises a pair of headrest support rods 110a and 110b for supporting the headrest body, upper ends of the pair of headrest support rods 110a and 110b are connected with a headrest support crossbar 120, and lower ends of the pair of headrest support rods 110a and 110b are connected with a headrest support straight bar 140a and 140b through a bent portion 130a and 130b, respectively. Locking slots 111a and 111b for locking the headrest body are formed on each headrest support rod 110a and 110b at intervals. The locking grooves 111a and 111b on the pair of headrest support bars 110a and 110b are oriented in the same direction.

According to the conventional arrangement, locking slots 141a, 141b are also arranged in a face-to-face direction of the headrest support straight bars 140a, 140b, which are convenient for locking with a seat back. A pair of headrest support straight bars 140a, 140b are inserted into a guide sleeve in the seat back, and a button is arranged in the guide sleeve, and the pair of headrest support straight bars 140a, 140b can be unlocked by pressing the button, thereby unlocking the whole headrest, and the whole headrest rod 100 is movable vertically such that the whole headrest is adjustable in a vertical direction.

The locking slots 141a, 141b in the middle position of the locking slots 141a, 141b are in single-sided locking, and the locking slots 141a, 141b in the highest and lowest positions play a locking role at both sides.

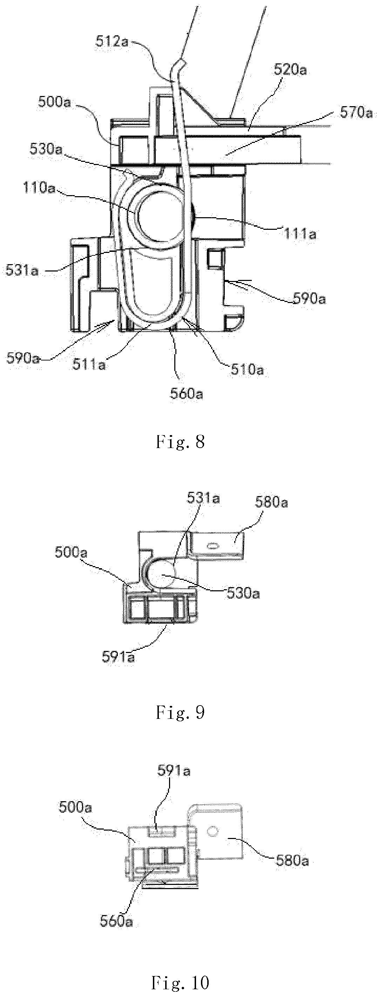

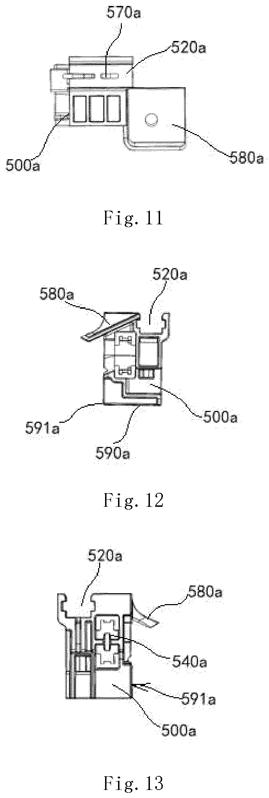

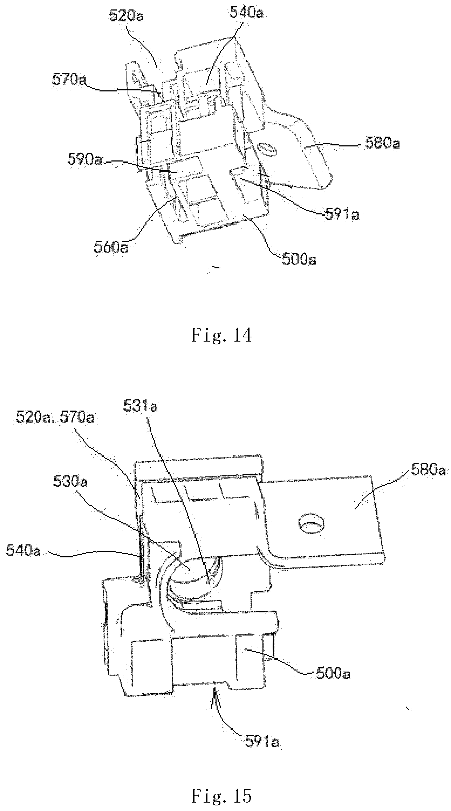

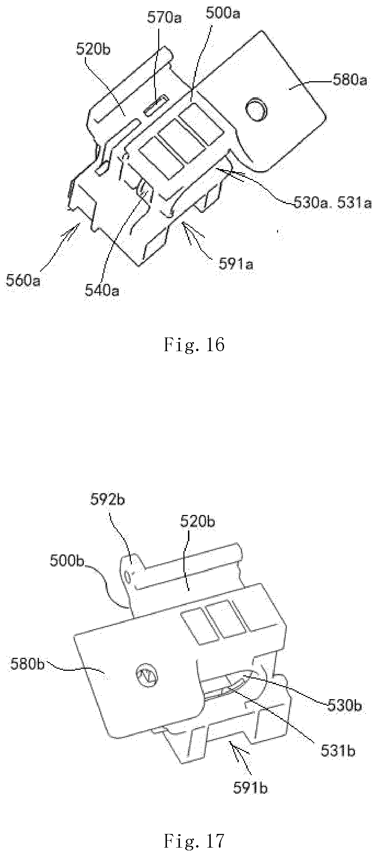

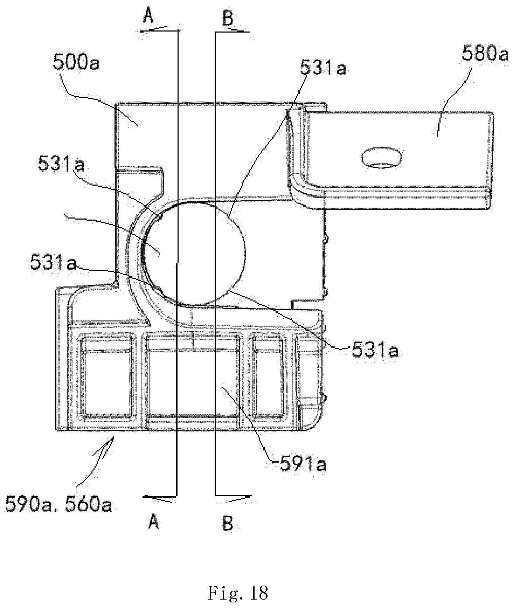

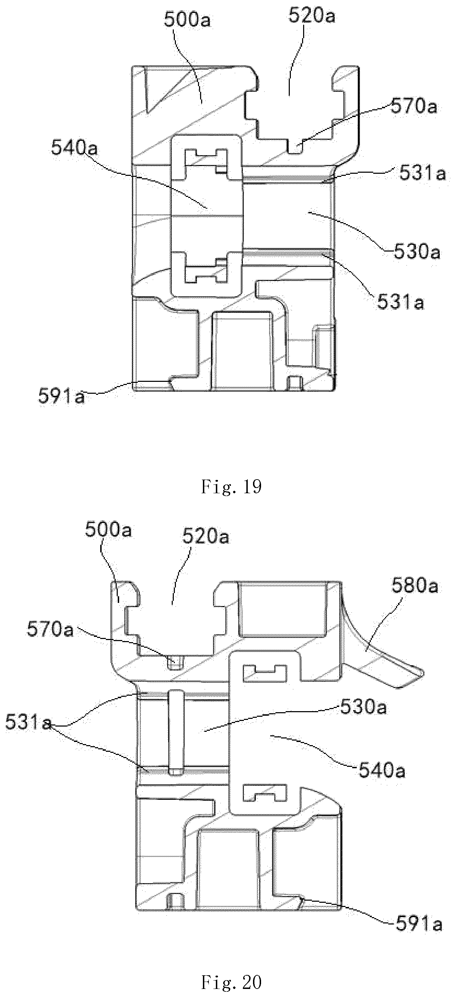

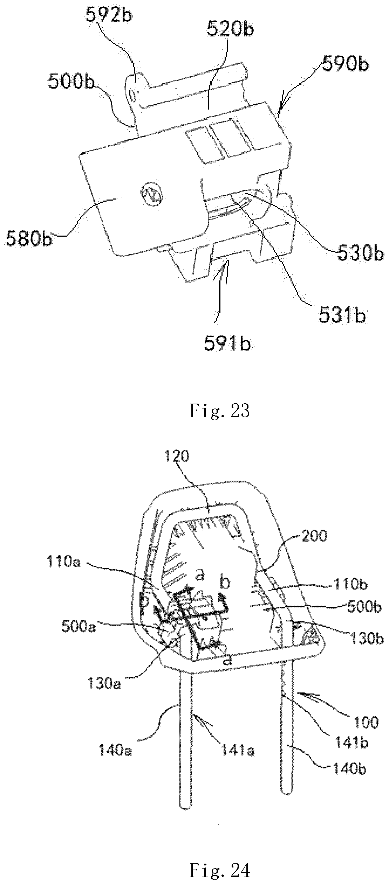

Referring to Figs. 9 to 20, 22 and 23, the present invention further includes a left locking and unlocking component 500a (the aforementioned first locking and unlocking component) and a right locking and unlocking component 500b (the aforementioned second locking and unlocking component) for locking the headrest body to a pair of headrest support bars 110a and 110b and for adjusting the headrest body back and forth on the pair of headrest support bars 110a and 110b. The left locking and unlocking component 500a and the right locking and unlocking component 500b are mounted on a pair of headrest support bars 110a and 110b, and the left locking and unlocking component 500a and the right locking and unlocking component 500b are locked and unlocked with the pair of support rods 110a and 110b through locking and unlocking steel wires 510a and 510b mounted therein, respectively. When locking, Locking and unlocking steel wires 510a and 510b are embedded in the locking slots on the pair of headrest support rods, and when unlocking, the locking and unlocking steel wires exit from the locking slots 111a and 111b on the pair of headrest support rods 110a and 110b; locking and unlocking wires 510a and 510b of the left and right locking and unlocking components 500a and 500b are unlocked, as driven by an unlocking means 600 mounted on the left and right locking and unlocking components 500a and 500b.

The structures of the left locking and unlocking component 500a and the right locking and unlocking component 500b are essentially the same, except that the right locking and unlocking component 500b has an additional spring seat 592b.

The unlocking means 600 moves in a direction perpendicular to the X direction, that is, a Y direction, thereby realizing the unlocking in the X direction.

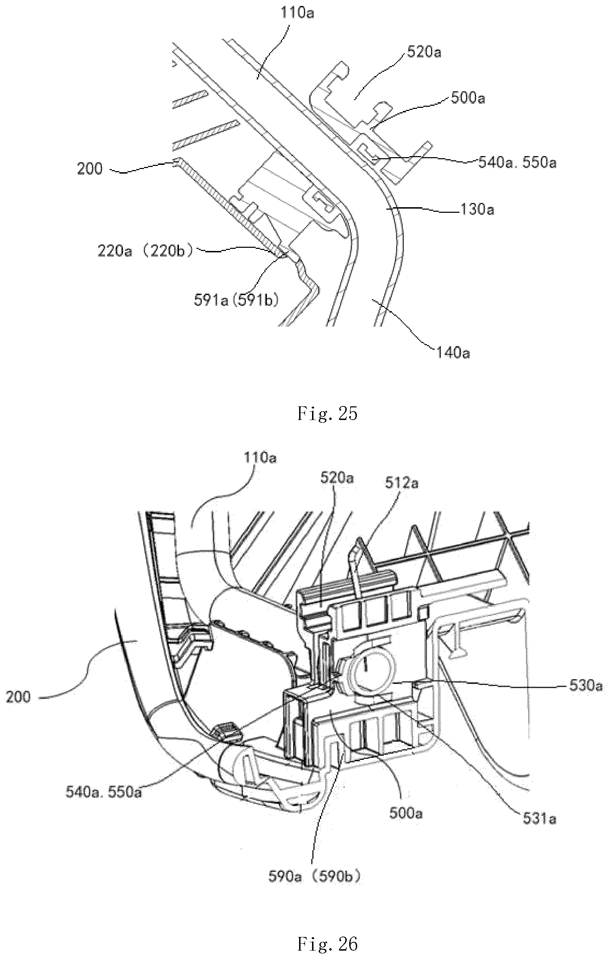

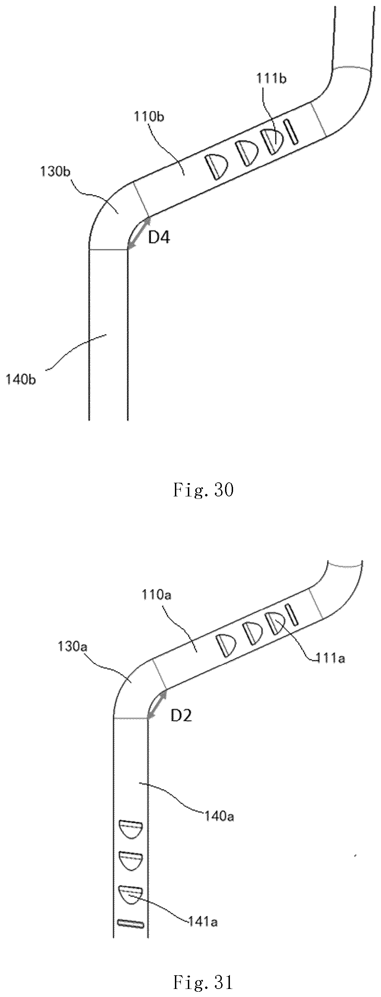

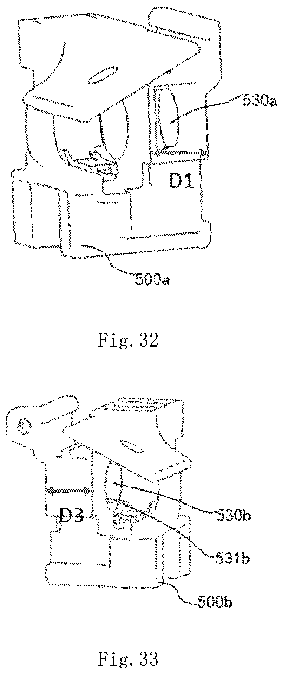

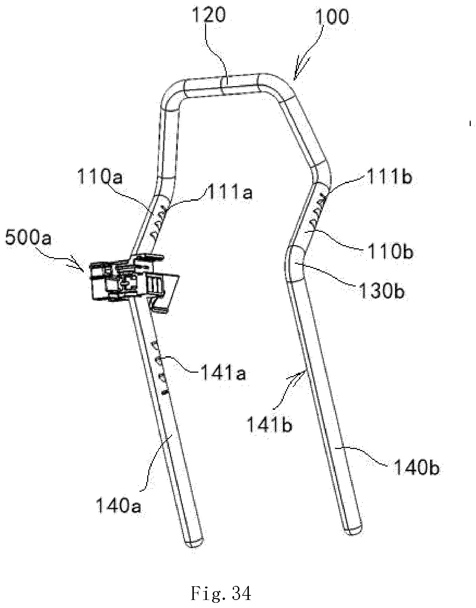

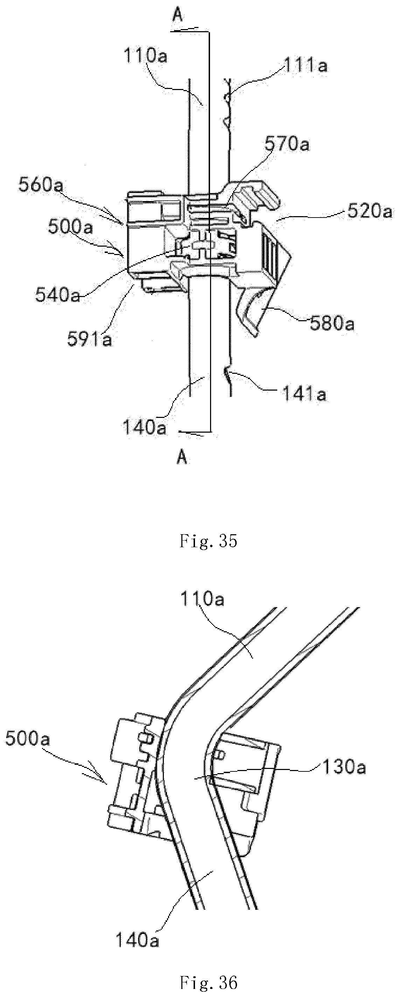

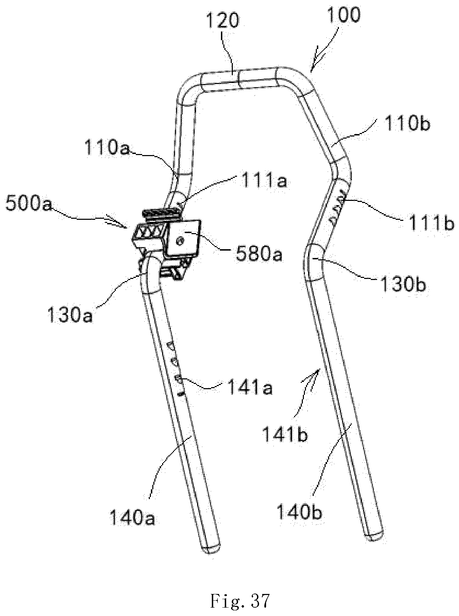

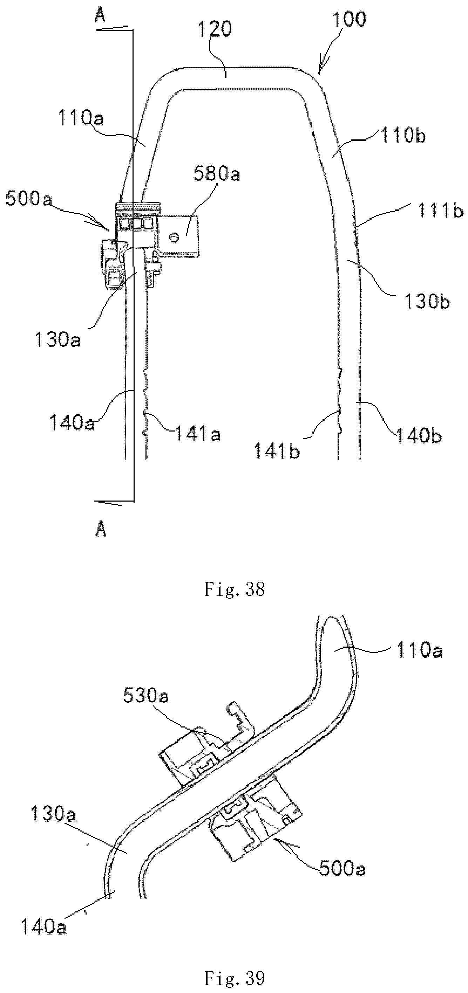

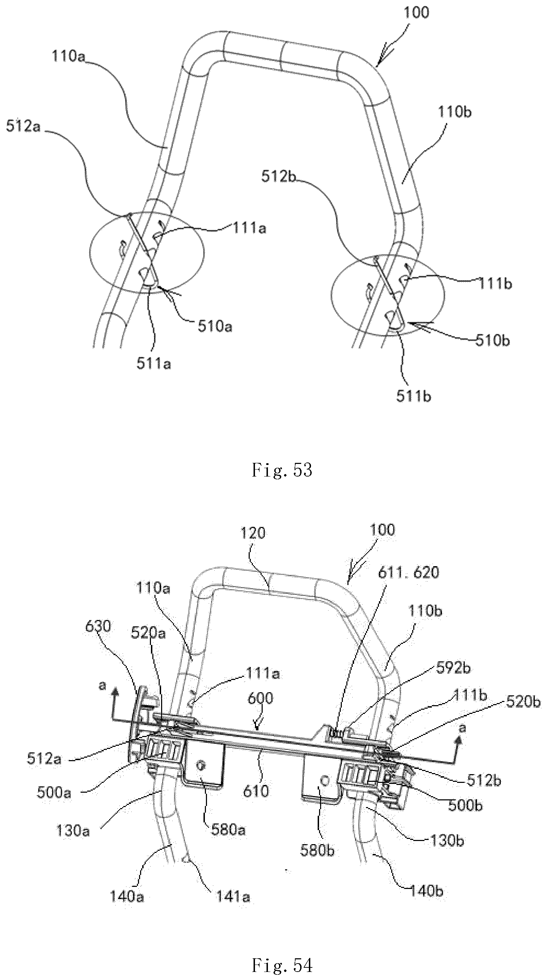

Referring to Fig. 53, Fig. 21a to Fig. 21d, Fig. 22 and Fig. 23, and Fig. 25 to Fig. 39, the locking and unlocking steel wires 510a and 510b each have a U-shaped structure 511a and 511b, and the U-shaped structures 511a and 511b of the locking and unlocking steel wires 510a and 510b embrace the headrest support rods 110a and 110b and have locking and unlocking portions 512a, 512b. The locking and unlocking portions 512a, 512b are embedded into the locking slots 111a, 111b on the pair of headrest support rods 110a, 110b when locking, and exit from the locking slots 111a, 111b on the pair of headrest support rods 110a, 110b when unlocking.

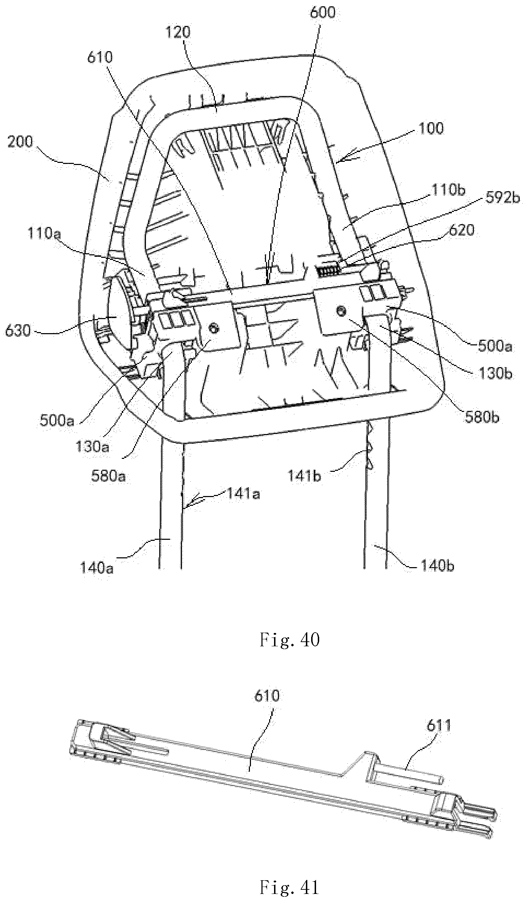

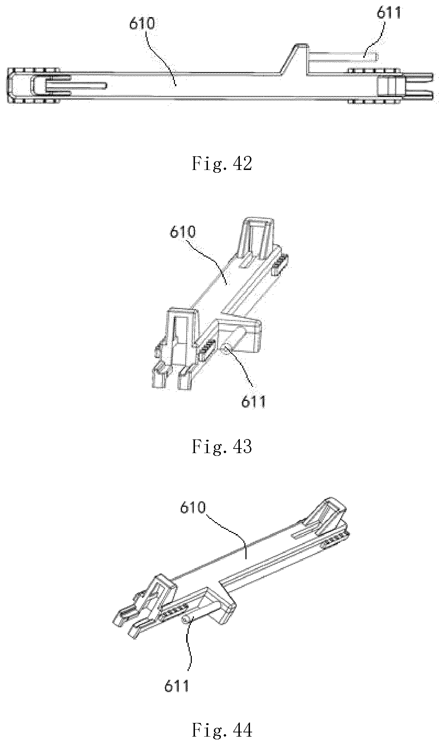

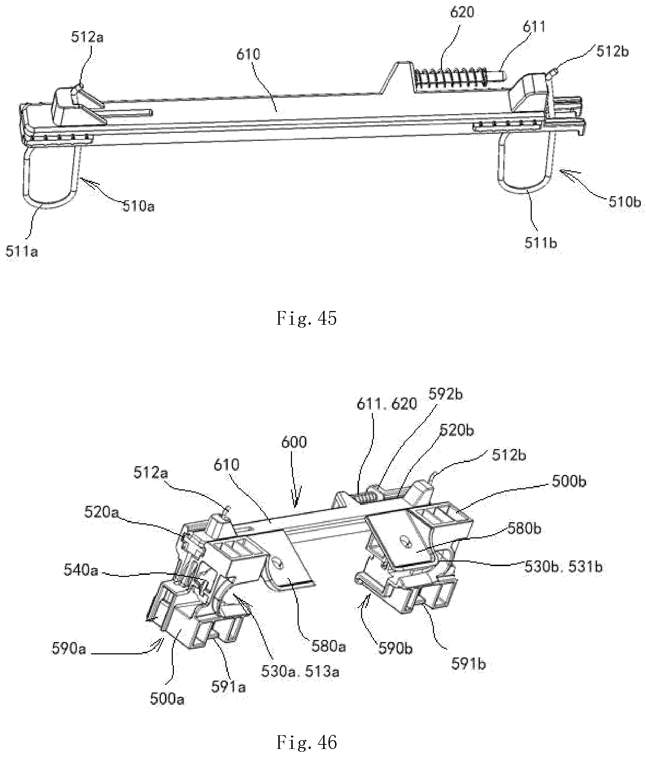

With reference to Figs. 40 to 46, the locking and unlocking portions 512a, 512b of the left and right locking and unlocking components 500a and 500b are in contact with the unlocking means 600, and the right locking and unlocking component 500b is moved by a movement of the unlocking means 600 left and right in the Y direction to drive the locking and unlocking portions 512a, 512b to move, thus realizing locking and unlocking.

The unlocking means 600 comprises an unlocking lever 610 and an unlocking spring 620. The unlocking lever 610 is movably in the Y direction mounted on the left and right locking and unlocking component 500a and 500b and is connected with the locking and unlocking portions 512a and 512b of the locking and unlocking wires 510a, 510b in the left and right locking and unlocking components 500a, 500b. The unlocking spring 620 is mounted on the right locking and unlocking component 500b and acts between the spring seat 592b of the right locking and unlocking component 500b and the unlocking lever 610 (of course, it is also possible to mount the unlocking spring 620 on the left locking and unlocking component 500a and act between the left locking and unlocking component 500a and the unlocking lever 610 or to have two unlocking springs 620 each mounted on one of the left and right locking and unlocking components 500a 500b and acting between the left locking and unlocking component 500a and the unlocking lever 610 and between the right locking and unlocking component 500b and the unlocking lever 610. Although it is necessary to adjust the structures of the left locking and unlocking component 500a and the unlocking means 600, the principle is consistent with the structure of the present invention).

Unlocking lever guide grooves 520a and 520b are provided on the left and right locking and unlocking components 500a and 500b, and both ends of the unlocking lever 610 are slidably arranged in the unlocking lever guide grooves 520a and 520b on the left and right locking and unlocking components 500a and 500b.

Referring to Fig. 40, the unlocking button 630 is floatingly arranged on the rear cover 400 in the headrest body, and the unlocking button 630 is propped on one end of the unlocking lever 610. A spring post 611 is provided at the position where the unlocking lever 610 is mounted on the right locking and unlocking component 500b, and one end of the unlocking spring 620 is fitted around the spring post 611, so that the unlocking spring 620 is stably supported.

Referring to Fig. 40, Fig. 21a to Fig. 21d, and Fig. 25 to Fig. 39, another feature of the present invention is that the left and right locking and unlocking components 500a and 500b are fully wrapped on the headrest support rods 110a and 110b. Specifically, both the left and right locking and unlocking components 500a and 500b are provided with a wrapping hole 530a and 530b in a closed form, and the headrest support rods 110a and 110b respectively pass through the wrapping holes 530a and 530b.

A plurality of ribs 531a, 531b are arranged in a circumferential direction on walls of the covering holes 530a, 530b at intervals, and the ribs 531a, 531b are in contact with the headrest support rods 110a, 110b, so that an operating force for adjusting the headrest back and forth can be adjusted by adjusting a height of the ribs 531a, 531b, which is more convenient.

Ω ring slots 540a, 540b are arranged in the left and right locking and unlocking components 500a and 500b. After the headrest support rods 110a, 110b pass through the wrapping holes 530a, 530b respectively, the Ω rings 550a, 550b are inserted into the Ω ring slots 540a, 540b and clamped on the headrest support rods 110a, 110b so that the left and right locking and unlocking components 500a and 500b are mounted to the headrest support rods 110a, 110b.

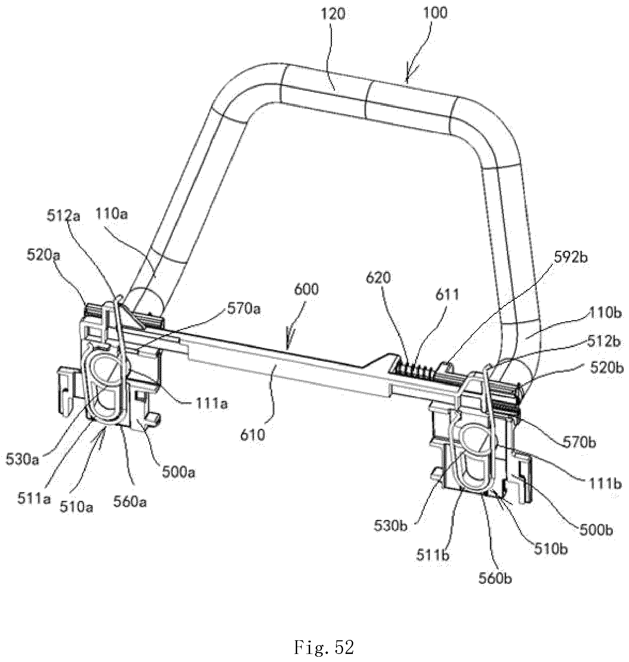

Further, referring to Fig. 52, locking and unlocking steel wire slots 560a, 560b are provided in both the left and right locking and unlocking components 500a and 500b, and the locking and unlocking steel wire slots 560a, 560b vertically intersect with the wrapping holes 530a, 530b. A bottom of the locking and unlocking steel wire slot 560a, 560b is opened, and locking and unlocking steel wire perforations 570a and 570b are arranged in the left and right locking and unlocking components 500a and 500b, which are communicated with the locking and unlocking steel wire slots 560a and 560b. After the locking and unlocking steel wires 510a, 510b are inserted into the locking and unlocking steel wire slots 560a, 560b through the bottom openings, the unlocking portions 512a, 512b in the locking and unlocking steel wires 510a, 510b pass through the locking and unlocking steel wire perforations 570a, 570b and therefore pass through the left and right locking and unlocking components 500a and 500b.

The left locking and unlocking component 500a and the right locking and unlocking component 500b are each provided with a headrest body mounting portion 580a, 580b.

With reference to Fig. 40, Fig. 21a to Fig. 21d, and Fig. 25 to Fig. 39, since the left locking and unlocking component 500a and the right locking and unlocking component 500b are fully wrapped on the headrest support rods 110a and 110b, in order to facilitate mounting of the left locking and unlocking component 500a and the right locking and unlocking component 500b on the headrest support rods 110a and 110b, according to the present invention, a chord length D2, D4 of the bent portion 130a, 130b in the headrest rod 100 is designed to be larger than a length D1, D3 of the wrapping hole 530a, 530b in the left and right locking and unlocking component 500a, 500b.

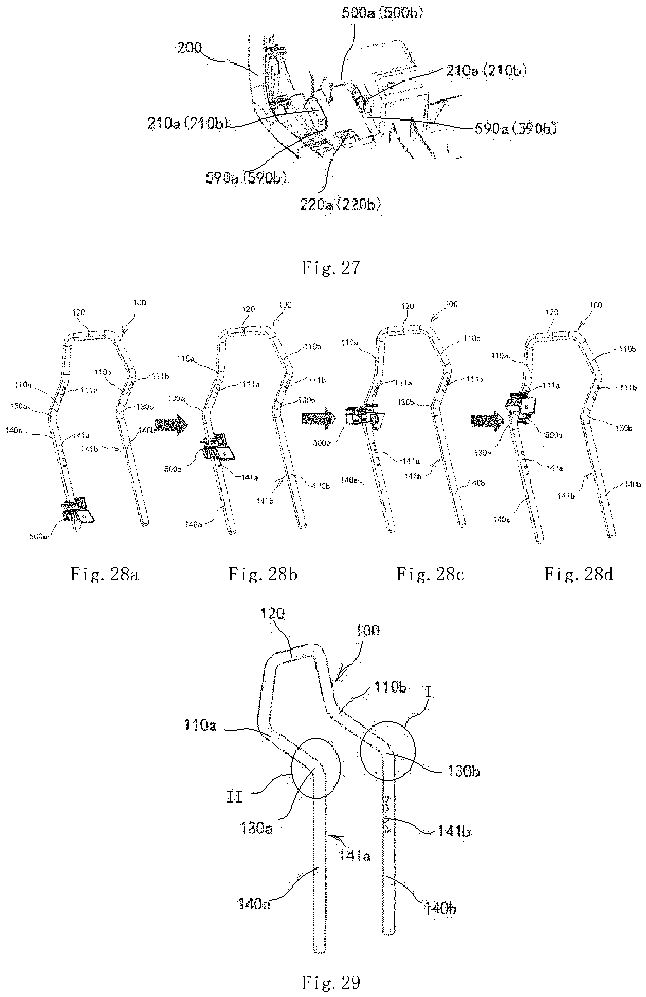

Referring to Figs. 28a to 28d, and Figs. 25 to 39, the left locking and unlocking component 500a and the right locking and unlocking component 500b are mounted to the headrest support rods 110a and 110b in a manner as follows:
Passing the headrest support straight bars 140a, 140b through the wrapping holes 530a, 530b in the left and right locking and unlocking components 500a, 500b, so that the left and right locking and unlocking components 500a, 500b are fitted around the headrest support straight bars 140a, 140b, then moving the left and right locking and unlocking components 500a, 500b upward along the headrest support straight bars 140a, 140b to positions close to the bent portions 130a, 130b, and then rotating inward by 90 degrees the left and right locking and unlocking components 500a, 500b while moving the same over the bent portions 130a, 130b, since a chord length D2, D4 of the bent portion 130a, 130b in the headrest rod 100 is designed to be larger than a length D1, D3 of the wrapping hole 530a, 530b in the left and right locking and unlocking component 500a, 500b, the left and right locking and unlocking component 500a, 500b can be easily moved over the bent portions 130a, 130b to the positions of the headrest support rods 110a, 110b. After the left and right locking and unlocking components 500a, 500b are moved to the positions of the headrest support rods 110a, 110b, rotating them outward by 90 degrees, so that the unlocking portions 512a and 512b in the locking and unlocking steel wires 510a and 510b correspond to the locking slots 111a and 111b on the pair of headrest support rods 110a and 110b in terms of positions, and are embedded into a locking slot 111a, 111b on the pair of headrest support rods 110a, 110b, and at the same time, the headrest body mounting portions 580a, 580b on the left and right locking and unlocking components 500a, 500b are opposite and located on inner sides of the pair of headrest support rods 110a, 110b.

The middle cover 300 and the front cover 200 of the headrest body cover the left and right locking and unlocking components 500a and 500b and the headrest rod 100, wherein the front cover 200 is fixed to the headrest body mounting portions 580a, 580b by fasteners such as screws, the middle cover 300 is buckled on the front cover 200, and the rear cover 400 is mounted to the middle cover 300.

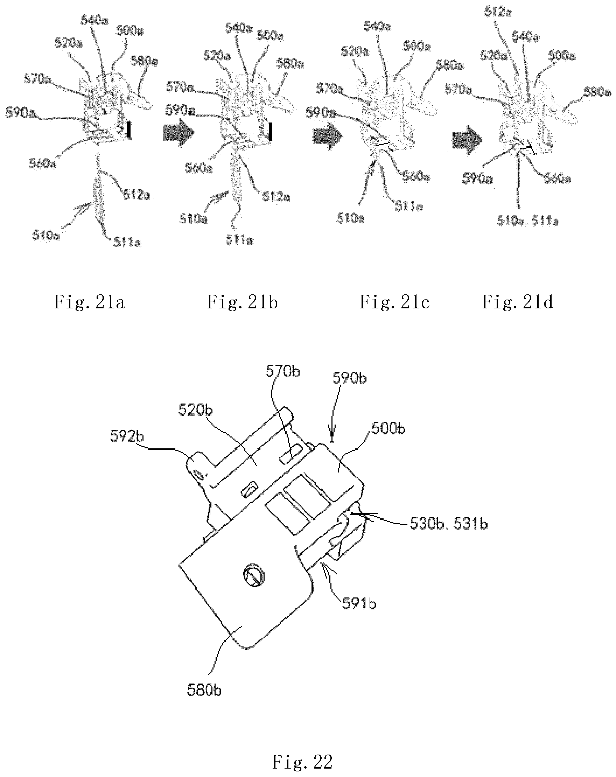

Referring to Figs. 21a to 21d, and Figs. 25 to 39, two grooves 590a and 590b are respectively provided on the left locking and unlocking component 500a and the right locking and unlocking component 500b, and two ribs 210a and 210b are provided on the front cover 200 at positions corresponding to the left locking and unlocking component 500a and the right locking and unlocking component 500b, and the ribs 210a and 210b are inserted into the corresponding grooves 590a, 590b. At the same time, the left and right locking and unlocking component 500a and 500b are each provided with a locking block stopping portion 591a, 591b, and the front cover 200 is provided with barbs 220a and 220b at positions corresponding to the left and right locking and unlocking components 500a and 500b, and the barbs 220a and 220b hook the corresponding locking block stopping portions 591a and 220b.

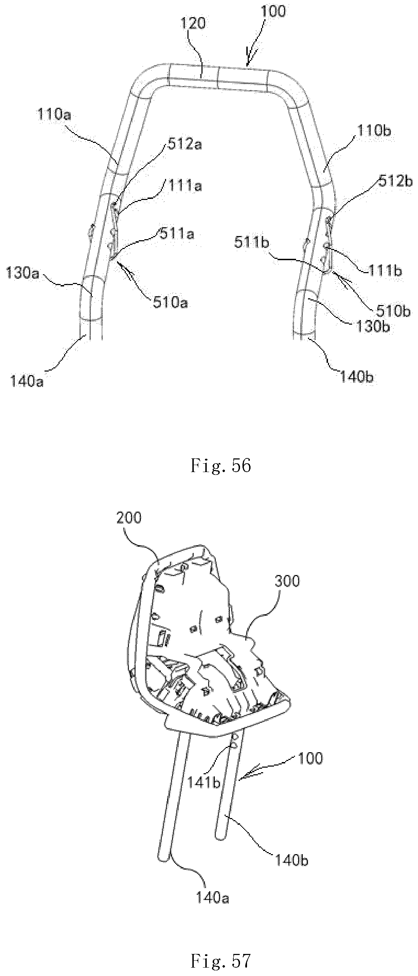

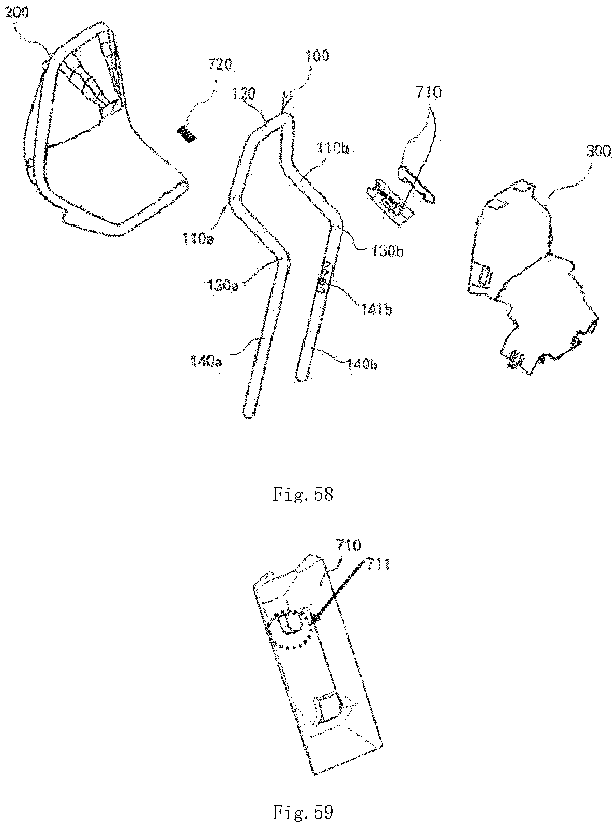

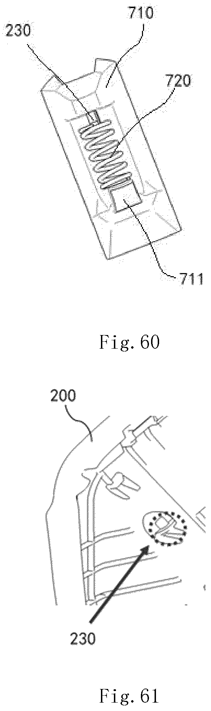

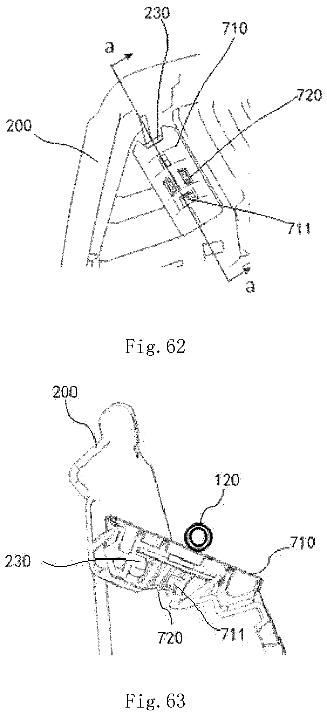

Referring to Fig. 57 to Fig. 64, in order to allow the front cover 200 to float relative to the headrest rod 100 and ensure the comfort of head resting, the front cover 200 is mounted to a headrest support crossbar 120 through a floater 710, and the floater 710 is supported on the front cover 200 through a floating spring 720. Specifically, a position of the front cover 200 corresponding to the floater 710 is provided with a small protrusion 230, and the floater 710 is also provided with a small protrusion 711. One end of the floating spring 720 is fitted around the small protrusion 230, and the other end is fitted around the small protrusion 711 to ensure the stability of the floating spring 720, so that the headrest support crossbar 120 is pressed against the floater 710, and a lower portion of the floater 710 is provided with the floating spring 720, so that no matter where the headrest rod 100 is located, the floater 710 is always in contact with the headrest support crossbar 120, for eliminating a gap, reducing vibration and optimizing the NVH performance.

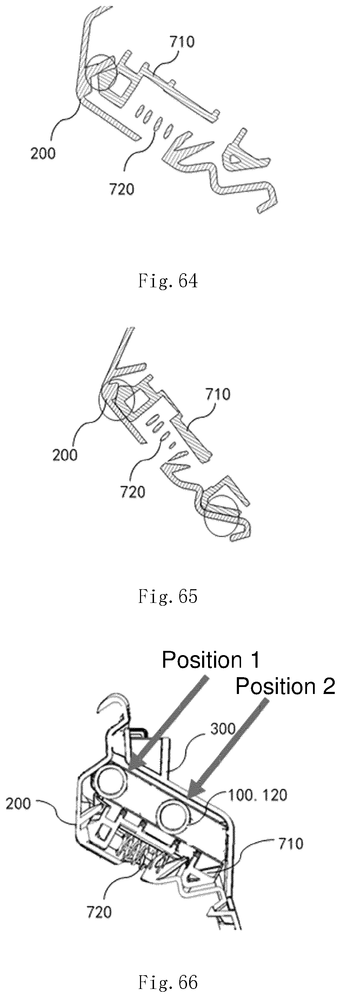

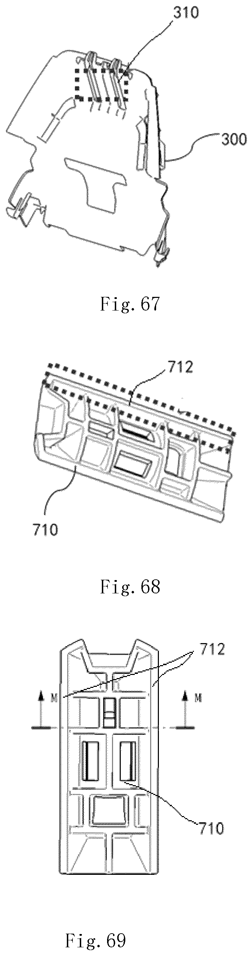

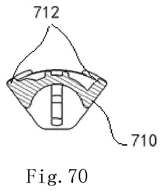

Referring to Figs. 65 to 70, the headrest support crossbar 120 is fixed collectively by the floater 710 and the middle cover 300. The lower portion of the floater 710 is provided with a floating spring 720, and the floater 710 is movable to ensure that the floater 710 and the headrest support crossbar 120 can always lie against the headrest support crossbar 120 during the movement of the headrest rod 100. Besides, in order to allow the middle cover 300 and the floater 710 to always lie against the headrest support crossbar 120, the middle cover 300 is provided with a first floating rib 310, and the floater 710 is provided with a second floating rib 712. The first floating rib 310 and the second floating rib 712 are always in contact with the headrest support crossbar 120 to prevent jumping up and down.

## Claims

1. A four-direction adjustable seat headrest comprising a headrest rod and a headrest body, the headrest rod comprising a pair of headrest supporting rods for supporting the headrest body, locking slots for locking the headrest body being formed in each of the headrest supporting rods at intervals, **characterized in that** the seat headrest further comprises first and second locking and unlocking components configured to lock the headrest body to the pair of headrest supporting rods and capable for adjusting the headrest body on the pair of headrest supporting rods, the first and second locking and unlocking components are mounted on the pair of headrest supporting rods, and locked to or unlocked from the pair of supporting rods respectively by means of locking and unlocking steel wires mounted therein, wherein, when locking, the locking and unlocking steel wires are embedded into the locking slots in the pair of headrest supporting rods, and when unlocking, the locking and unlocking steel wires exit from the locking slots in the pair of headrest supporting rods; the locking and unlocking steel wires in the first and second locking and unlocking components are unlocked, as driven by an unlocking means mounted on the first and second locking and unlocking components.

2. The four-direction adjustable seat headrest according to claim 1, wherein the locking slots on the pair of headrest support rods have the same orientation.

3. The four-direction adjustable seat headrest according to claim 2, wherein the unlocking means is moveable in a Y direction.

4. The four-direction adjustable seat headrest according to claim 1, wherein the locking and unlocking steel wires each comprise a U-shaped structure embracing the headrest support rod and having a locking and unlocking portion, the locking and unlocking portion is embedded into the locking slots of the pair of support rods when locking and exits from the locking slots of the pair of headrest support rods when unlocking; and the locking and unlocking portions extend out of the first and second locking and unlocking components and are connected with the unlocking means, such that the unlocking means urges the locking and unlocking portions into a movement to realize locking and unlocking.

5. The four-direction adjustable seat headrest according to any one of claims 1-4, wherein the unlocking means comprises an unlocking lever and an unlocking spring, the unlocking lever is movably mounted on each of the first and second locking and unlocking components and is connected with the locking and unlocking portion of the locking and unlocking steel wire in each of the first and second locking and unlocking components, and the unlocking spring is mounted on the first and/or second locking and unlocking components and acts between the first and/or second locking and unlocking components and the unlocking levers.

6. The four-direction adjustable seat headrest according to claim 5, wherein each of the first and second locking and unlocking components is provided with an unlocking lever guide groove, and two ends of the unlocking lever are slidably arranged in the unlocking lever guide grooves of the first and second locking and unlocking components respectively.

7. The four-direction adjustable seat headrest according to claim 6, wherein an unlocking button is arranged at one end of the unlocking lever, and the unlocking button is floatingly arranged on the headrest body.

8. The four-direction adjustable seat headrest according to claim 7, wherein the first and second locking and unlocking components fully wrap the headrest support rods.

9. The four-direction adjustable seat headrest according to claim 8, wherein each of the first and second locking and unlocking components is provided with a wrapping hole in a closed form, and the headrest support rod passes through the wrapping hole.

10. The four-direction adjustable seat headrest according to claim 9, wherein a plurality of ribs are circumferentially arranged at intervals on a wall of each wrapping hole, and the ribs are in contact with the headrest support rod.

11. The four-direction adjustable seat headrest according to claim 10, wherein both the first and second locking and unlocking components are mounted on the headrest support rods by means of Q rings clamped on the headrest support rods.

12. The four-direction adjustable seat headrest according to claim 11, wherein Ω ring slots are arranged in the first and second locking and unlocking components, and the Ω rings are inserted into the Ω ring slots.

13. The four-direction adjustable seat headrest according to claim 12, wherein locking and unlocking steel wire slots are arranged in both the first and second locking and unlocking components, and the locking and unlocking steel wires are inserted into the locking and unlocking steel wire slots.

14. The four-direction adjustable seat headrest according to claim 13, wherein a bottom of the locking and unlocking steel wire slot is open, and the locking and unlocking steel wire is inserted into the locking and unlocking steel wire slot through the open in the bottom.

15. The four-direction adjustable seat headrest according to claim 14, wherein locking and unlocking steel wire perforations are arranged in the first and second locking and unlocking components, which are in communication with the locking and unlocking steel wire slots, and the unlocking portions of the locking and unlocking steel wires penetrate through the first and second locking and unlocking components via the locking and unlocking steel wire perforations.

16. The four-direction adjustable seat headrest according to claim 15, wherein the locking and unlocking steel wire slots vertically intersect with the wrapping holes.

17. The four-direction adjustable seat headrest according to claim **5,** wherein each of the first and second locking and unlocking components is provided with a headrest body mounting portion, and the headrest body is fixed to the headrest body mounting portion through fasteners.

18. The four-direction adjustable seat headrest according to claim 17, wherein the headrest body comprises a front cover, a middle cover and a rear cover, wherein the middle cover and the front cover wrap the first and second locking and unlocking components and the headrest rod, wherein the front cover is fixed to the headrest body mounting portion through fasteners, the middle cover is buckled on the front cover, and the rear cover is mounted on the middle cover.

19. The four-direction adjustable seat headrest according to claim 18, wherein at least one groove is arranged on each of the first and second locking and unlocking components, and at least two ribs are arranged on the front cover, and the ribs are inserted into the corresponding grooves.

20. The four-direction adjustable seat headrest according to claim 19, wherein at least one locking block stopping potion is arranged on each of the first and second locking and unlocking components, and at least two barbs are arranged on the front cover, and the barbs are hooked on the corresponding locking block stopping portions.

21. The four-direction adjustable seat headrest according to claim 20, wherein upper ends of the pair of headrest support rods are connected through a headrest support crossbar, the front cover is mounted on the headrest support crossbar through a floater, and the floater is floatingly supported on the front cover through a floating spring.

22. The four-direction adjustable seat headrest according to claim 2, wherein a first floating rib is arranged on the middle cover, a second floating rib is arranged on the floater, and the first floating rib and the second floating rib are in contact with the headrest support crossbar.

23. The four-direction adjustable seat headrest according to claim 22, wherein lower ends of the pair of headrest support rods are respectively connected with a headrest support straight bar through a bent portion, and a chord length of the bent portion is greater than a length of wrapping holes in the first and second locking and unlocking components.

24. An assembly method of the four-direction adjustable seat headrest according to claim 23, wherein the method comprises steps of the following:
Step 1: inserting the pair of locking and unlocking steel wires into the first and second locking and unlocking components respectively;
Step 2: passing the headrest support straight bars through the wrapping holes in the first and second locking and unlocking components, so that the first and second locking and unlocking components are fitted around the headrest support straight bars, then moving the first and second locking and unlocking components upward along the headrest support straight bars to positions close to the bent portions, and then while rotating the first and second locking and unlocking components inward by 90°, moving the same over the bent portions, after the first and second locking and unlocking components are moved to the positions of the headrest support rods, rotating them outward by 90°, so that the unlocking portions in the locking and unlocking steel wires correspond to the locking slots on the pair of headrest support rods in terms of positions and are embedded into the locking slots on the pair of headrest support rods, and at the same time, the headrest body mounting portions of the first and second locking and unlocking components are opposite and located on inner sides of the pair of headrest support rods;
Step 3: inserting the pair of Ω rings into the first and second locking and unlocking components respectively and clamping them on the headrest support rods;
Step 4: mounting the unlocking means to the first and second locking and unlocking components;
Step 5: mounting the headrest body to the first and second locking and unlocking components and the headrest rod.
